# EUROPÄISCHE PATENTSCHRIFT

(11) **EP 1 360 246 B1**
(45) Veröffentlichungstag und Bekanntmachung des Hinweises auf die Patenterteilung: **28.06.2006**
(21) Anmeldenummer: 02701204.6
(22) Anmeldetag: 18.01.2002
(51) Int. Cl.: C09D 5/00, C09D 7/12

(54) **BESCHICHTUNG MIT GERINGER SOLARER ABSORPTION**
COATING WITH A NEGLIGIBLE SOLAR ABSORPTION
REVETEMENT A ABSORPTION SOLAIRE LIMITEE

(30) Priorität: 22.01.2001 DE 10102789
(43) Veröffentlichungstag der Anmeldung: 12.11.2003
(73) Patentinhaber: Construction Research & Technology GmbH, 83308 Trostberg (DE)
(72) Erfinder: Construction Research & Technology GmbH, 83308 Trostberg (DE)
(74) Vertreter: HOFFMANN EITLE
(86) Internationale Anmeldenummer: PCT/DE2002/000147
(87) Internationale Veröffentlichungsnummer: WO 2002/057374

(56) Entgegenhaltungen:
- DE-A- 4 418 214
- DE-A- 19 540 682
- DE-A- 19 928 235
- US-A- 4 546 045
- US-A- 5 540 998
- PATENT ABSTRACTS OF JAPAN vol. 2000, no. 06, 22. September 2000 (2000-09-22) & JP 2000 073001 A (ASAHI GLASS CO LTD;ASAHI GLASS COAT & RESIN KK), 7. März 2000 (2000-03-07)

## Beschreibung

Oberflächen, die aus technischen, oder auch aus ästhetischen Gründen dunkel eingefärbt oder beschichtet sind und die dem Sonnenlicht ausgesetzt sind, heizen sich je nach Farbtiefe mehr oder weniger auf.

In unserem Umfeld, insbesondere in kleineren Räumlichkeiten, wie z.B. in einem Fahrzeug, sei es ein PKW, ein LKW, ein Bus oder auch die Innenräume von Eisenbahnen, wird die solare Aufheizung dunkler Flächen als äußerst unangenehm empfunden. Die dunklen Flächen heizen sich je nach solarem Absorptionsgrad mehr oder weniger auf und geben ihre Wärme als Wännestrahlung in den Innenraum ab. Diese Wärme muss dann mit einer Klimaanlage kompensiert werden, was den Energieverbrauch des Fahrzeuges erheblich steigert.

In einem Fahrzeug gibt es Flächen, die aus technischen Gründen dunkel eingefärbt sein müssen. Die vordere Ablage in einem PKW ist hierfür ein gutes Beispiel. Wäre die Frontablage hell eingefärbt, so würde sie sich in der Windschutzscheibe spiegeln und dem Fahrer die Sicht auf die Straße erschweren. Sie muss also zwangsläufig dunkel eingefärbt sein. Da diese Fläche direkt unter der Windschutzscheibe liegt, ist sie der solaren Strahlung am meisten ausgesetzt und heizt sich entsprechend auf. Neben der unangenehmen Aufheizung des Fahrzeuges bedingt die starke Erwärmung der dunklen Oberflächen natürlich auch eine schnellere Materialermüdung bei den betroffenen Flächen.

Aus eher ästhetischen Gründen sind Ledersitze in PKW's überwiegend in dunklen Grautönen, meist sogar in schwarz ausgeführt. Steht ein solches Fahrzeug nun einige Zeit in der Sonne und sind die Ledersitze dem Sonnenlicht ausgesetzt, so heizen sie sich so stark auf, dass man sich kaum noch hineinsetzen kann.

Noch unangenehmer ist die solare Erwärmung von dunklen Lenkrädern, da man sie meist ohne jede Bekleidung mit nackter Hand anfassen muss.

Generell sind dunkel eingefärbte Flächen in geschlossenen Räumen, die Fenster haben, dadurch besonders problematisch, dass die Fenster im Wellenlängenbereich der solaren Einstrahlung also von unter 300 nm bis 2500 nm transparent sind. Sie lassen also fast die gesamte Sonnenenergie hinein. An herkömmlichen, dunklen Flächen wird nun ein erheblicher Teil der Sonnenenergie absorbiert. Die Flächen erwärmen sich und strahlen nun, entsprechend ihrer erreichten Temperatur im langwelligen Infrarotbereich bei Wellenlängen von 5 bis über 50 µm die Energie wieder ab.

Im langwelligen Infrarotbereich sind die Fenster jedoch nicht mehr transparent, somit bleibt die absorbierte Sonnenenergie im Raum gefangen. Wünschenswert wäre es jedoch, auch mit dunklen Flächen einen Teil der Sonnenenergie zu reflektieren, sodass dieser Teil der Energie über die Fenster wieder nach außen gelangen kann.

In den Vereinigten Staaten von Amerika sind die Dächer von Wohnhäusern überwiegend mit Bitumenschindeln gedeckt. Dunklere Farben wie grau oder grün haben hier den Vorrang. Durch den hohen Sonnenstand selbst in den Nordstaaten der USA und durch den meist geringen Isolationsstandard, wird über die dunklen Dächer viel Sonnenenergie eingefangen, die dann durch Klimaanlagen wieder kompensiert werden muss.

Auch die Wandfarben, die in den USA eingesetzt werden, sind im Gegensatz zu südeuropäischen Wandfarben, die meist in weiß gehalten sind, eher in dunkleren Erdtönen ausgeführt. Wie bei den Dächern trägt dies auch zur starken Erwärmung der Häuser bei.

Aber auch helle und sogar weiße Wandfarben haben noch eine durchaus nennenswerte solare Absorption im ultravioletten- und im nahen Infrarotbereich des Sonnenlichtes und heizen sich deshalb noch spürbar auf. Gerade in heißen Ländern wäre es wünschenswert, eine Außenwandfarbe mit möglichst geringer solarer Absorption zu haben.

In der US 5,540,998 wird ein "Solar-Hitzeschild-Coating" vorgestellt. Hier wird eine Beschichtungsanordnung beschrieben, die eine höhere Reflexion für Sonnenlicht im Bereich des nahen Infrarot hat. Nachteilig ist hier, dass die Anordnung aus zwei Schichten bestehen muss, da sie sonst nicht funktioniert.

Als erste oder Basisschicht wird eine weiße Schicht mit hoher solarer Reflexion benötigt. Auf diese Schicht wird dann eine achromatisch schwarze Farbe, die aus Buntpigmenten gebildet ist, aufgetragen.

Nachteilig ist hier, dass generell zwei Schichten aufgetragen werden müssen um mit einer dunklen Oberfläche eine geringere solare Absorption zu erzielen, aber auch, dass bei Defekten der dunklen oberen Schicht, eine weiße Schicht zum Vorschein kommt. Für viele Anwendungsbereiche wie z.B. bei einer dunklen Frontablagefläche im Auto, ist das Erscheinen wei-βer Flächen undenkbar und führt zur Nutzlosigkeit der gesamten Beschichtungsanordnung.

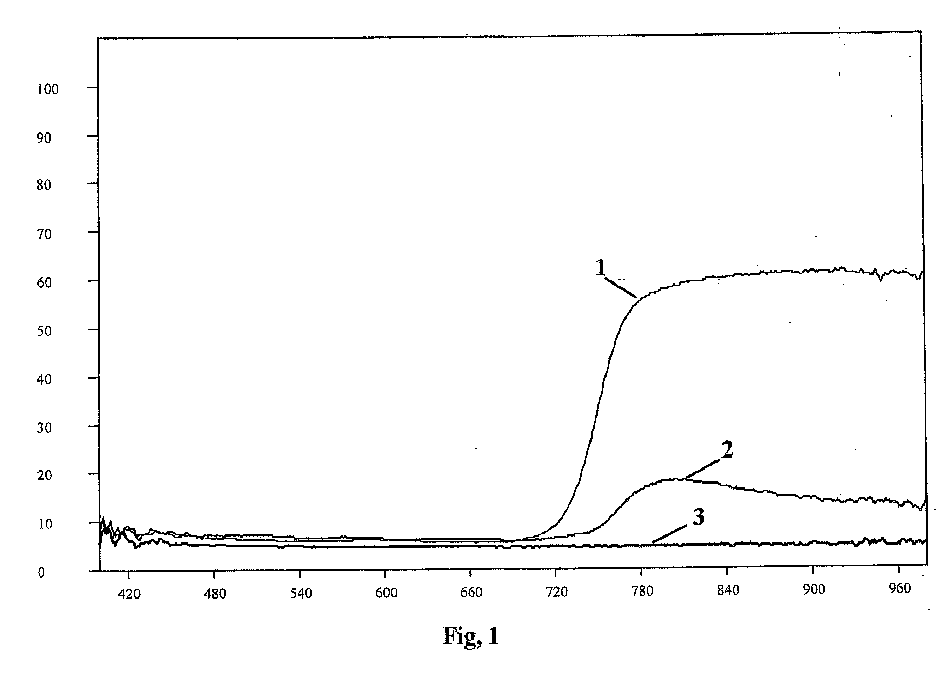

DE 19928235A beschreibt eine spekträlselektive Beschichtung, die im nahen Infrarotbereich (700-2500 nm) eine hohe Reflexion aufweist (vgl. Fig. 1) und dadurch eine geringe solare Absorption bewirkt. Diese Beschichtung enthält (a) ein Bindemittel, das im Wellenlängenbereich des thermischen Infrarot (2,5-50 µm) eine Transmission größer 40 % aufweist, (b) erste Pigmente, die im Wellenlängenbereich des thermischen Infrarot eine Transmission größer 40 % aufweisen und (c) zweite Pigmente, die im Wellenlängenbereich des thermischen Infrarot eine Reflexion größer 40 % aufweisen.

Aufgabe der vorliegenden Erfindung ist es eine Beschichtung darzustellen, die in den nicht sichtbaren Bereichen des Sonnenspektrums, also im ultravioletten und im nahen Infrarotbereich eine höhere Reflexion als übliche Farben aufweist und dadurch weniger Sonnenenergie absorbiert.

Diese Aufgabe wird erfindungsgemäß durch eine Beschichtung mit geringer solarer Absorption gelöst, die umfasst,
a) Ein Bindemittel und/oder eine Bindemittelkombination, die im Wellenlängenbereich des ultravioletten-, des sichtbaren Lichtes und im Wellenlängenbereich des nahen Infrarot von 300 bis 2500 nm eine Transparenz größer 60% haben und im Wellenlängenbereich des thermischen Infrarot von 5 bis 50 µm eine Transparenz kleiner 70% haben.
b) Erste Pigmente, die im Wellenlängenbereich von 300 bis 2500 nm eine Transparenz größer 70% haben und deren Teilchengröße so gewählt ist, dass sie im Wellenlängenbereich des nahen Infrarot von 700 bis 1500 nm eine hohe Rückstreuung größer 70% haben und die im Bereich des thermischen Infrarot von 5 bis 50 µm eine Absorption größer 40% aufweisen.
c) Zweite Pigmente, die im Wellenlängenbereich des sichtbaren Lichtes von 400 bis 700 nm spektralselektiv absorbieren und/oder im gesamten Wellenlängenbereich des sichtbaren Lichtes von 400 bis 700 nm mehr als 5.0% absorbieren und die im Wellenlängenbereich des nahen Infrarot von 700 bis 1500 nm eine Transparenz größer 50% haben und die im Bereich des thermischen Infrarot von 5 bis 50 µm eine Absorption größer 40% aufweisen.
d) und/oder dritte Pigmente, die im Spektralbereich des sichtbaren Lichtes von 400 bis 700 nm spektralselektiv absorbieren und/oder im gesamten Wellenlängenbereich des sichtbaren Lichtes von 400 bis 700 nm mehr als 50% absorbieren und die im Spektralbereich des nahen Infrarot selber reflektierend sind mit einer Reflexion größer 50% und die im Bereich des thermischen Infrarot von 5 bis 50 µm eine Absorption größer 40% aufweisen.
e) Füllstoffe zur, Verringerung des Brechungsindexes der Bindemittelmatrix, bestehend aus Mikrohohlkugeln, die mit einem Gas oder Luft gefüllt sind und/oder Lufteinschlüsse im Bindemittel, deren Teilchen- bzw. Lufteinschlussgröße so gewählt sind, dass sie im Wellenlängenbereich des sichtbaren Lichtes von 400 bis 700 nm eine geringe Rückstreuung kleiner 70% haben, im Wellenlängenbereich des nahen Infrarot von 700 bis 1500 nm die Rückstreuung der ersten Pigmente um 10% erhöht und die im Bereich des thermischen Infrarot von 5 bis 50 µm eine Absorption größer 40% aufweisen.

Vorteilhafte Weiterbildungen des Erfindungsgedankens ergeben sich aus den Unteransprüchen. Eine vorteilhafte Weiterbildung des Erfindungsgedankens ist dadurch gegeben, dass das Bindemittel ausgewählt ist aus
a) der Gruppe der lösemittelhaltigen Bindemittel, die umfasst, Acrylate, Styrol-Acrylate, Polyvinyle, Polystyrene und Styrene Copolymere, Alkydharze, gesättigte und ungesättigte Polyester, Hydroxid-funlctionale Polyester, Melamin-Formaldehyd Harze, Polyisocyanat Harze, Polyurethane, Epoxidharze, Fluorpolymere und Silikone, chlorsulfoniertes Polyäthylen, fluorierte Polymere, fluoriertes Acryl-Copolymer, Fluorsilikone, Plastisole, PVDF und Mischungen aus diesen.
b) der Gruppe der wässrigen Bindemittel, die umfasst, die Gruppe der wasserlöslichen Binder aus Alkyden, Polyester, Polyacrylate, Epoxide und Epoxidester, aus der Gruppe der wässrigen Dispersionen und Emulsionen, die umfasst, Dispersionen und Emulsionen auf der Basis von, Acrylat, Styrol-Acrylat, Ethylen-Acrylsäure-Copolymere, Methacrylat, Vinylpyrrolidon-Vinylacetat-Copolymere, Polyvinylpyrrolidon, Polyisopropylacrylat, Polyurethane, Silikon, Wachsdispersionen auf der Basis von Polyethylen, Polypropylen, Teflon®, synthetische Wachse, fluorierte Polymere, fluoriertes Acryl-Copolymer in wässriger Lösung, Fluorsilikone und Mischungen aus diesen.

Eine vorteilhafte Weiterbildung des Erfindungsgedankens ist dadurch gegeben, dass das Bindemittel im Wellenlängenbereich des sichtbaren Lichtes von 300 bis 700 nm eine Transparenz größer 70% hat und im Wellenlängenbereich des thermischen Infrarot von 5 bis 50 µm eine Transparenz kleiner 60% hat.

Eine vorteilhafte Weiterbildung des Erfindungsgedankens ist dadurch gegeben, dass die ersten Pigmente ausgewählt sind aus der Gruppe der anorganischen Pigmente, aus der Gruppe der Metalloxide, der Metallsulfate, der Metallsulfide, der Metallfluoride, der Metallsilikate, der Metallcarbonate und Mischungen aus diesen.

Eine vorteilhafte Weiterbildung des Erfindungsgedankens ist dadurch gegeben, dass die ersten Pigmente ausgewählt sind aus der Gruppe der abbaubaren Materialien ausgewählt aus Calciumcarbonat, aus Magnesiumcarbonat, aus Zirkonsilikat, aus Zirkonoxid, aus Aluminiumoxid, aus natürlichem Bariumsulfat und Mischungen aus diesen und dass der Brechungsindex der ersten Pigmente größer 1,5 vorzugsweise größer 1,7 ist, wobei die Teilchengröße der ersten Pigmente zwischen 0,9 und 3,1 µm, insbesondere bei 2 µm liegt.

Eine vorteilhafte Weiterbildung des Erfindungsgedankens ist dadurch gegeben, dass die zweiten Pigmente ausgewählt sind aus der Gruppe der organischen Pigmente, ausgewählt aus der Gruppe der Azopigmente, ausgewählt aus Monoazo-, Disazo-, β-Naphtol-, Naphtol AS-, verlackte Azo-, Benzimidazolon-, Disazokondensations-, Metallkomplex-, Isoindolinon und Isoindolin-Pigmenten, ausgewählt aus der Gruppe der polycyclischen Pigmente, ausgewählt aus, Phthalocyanin-, Chinacridon-, Perylen- und Perinon-, Thioindigo-, Anthrachinon-, Anthrapyrimidin-, Flavanthron-, Pyranthron-, Anthanthron-, Dioxazin-, Triarylcarbonium-, Chino-phthalon-, Diketo-pyrrolo-pyrrol-Pigmente.

Eine weitere vorteilhafte Weiterbildung des Erfindungsgedankens ist dadurch gegeben, dass die dritten Pigmente ausgewählt sind aus der Gruppe der anorganischen Pigmente, ausgewählt aus der Gruppe der Metalloxide und -Hydroxide, insbesondere der Eisenoxide, aus Cadmium-, Wismut-, Chrom-, Ultramarin- und Eisenblau-Pigmenten, aus der Gruppe der Rutil- und Spinellmischphasenpigmente und der beschichteten, plättchenförmigen Glimmerpigmente.

Eine vorteilhafte Weiterbildung des Erfindungsgedankens ist dadurch gegeben, dass die Teilchengröße der dritten Pigmente zwischen 0,7 und 2,9 µm, insbesondere zwischen 0,9 und 1,8 µm liegt.

Eine vorteilhafte Weiterbildung des Erfindungsgedankens ist dadurch gegeben, dass es sich bei den Füllstoffen um Mikrohohlkugeln aus einem organischen und/oder anorganischen Material handelt, das im Wellenlängenbereich von 300 bis 1500 nm eine Transparenz größer 70% aufweist und dass die Teilchengröße der Mikrohohlkugeln zwischen 10 uns 100 µm, insbesondere zwischen 20 und 40 µm liegt, wobei vorteilhafterweise die Mikrohohlkugeln aus Kunststoffen und/oder Glas ausgewählt werden.

Weiterhin hat es sich als vorteilhaft für die Weiterbildung des Erfindungsgedankens herausgestellt, dass Mikrohohlkugeln aus Kunststoff ausgewählt werden, die in einer wässrigen Suspension vorliegen und die nach Abtrocknen einen Hohlraum bilden, wobei die Teilchengröße dieser Mikrohohlkugeln bei 0.3 bis 1 µm liegt.

Eine weitere vorteilhafte Weiterbildung des Erfindungsgedankens ist dadurch gegeben, dass die Reflexion der Beschichtung im Wellenlängenbereich des nahen Infrarot von 800 bis 1100 nm auf durchgehend größer 60%, bzw. besonders vorteilhaft auf durchgehend größer 70% in diesem Wellenlängenbereich eingestellt wird.

Eine vorteilhafte Weiterbildung des Erfindungsgedankens ist dadurch gegeben, dass die Reflexion der Beschichtung im Wellenlängenbereich des sichtbaren Lichtes von 400 bis 700 nm kleiner 70%, bevorzugt kleiner 60% und besonders bevorzugt kleiner 50% ist.

Eine besonders vorteilhafte Weiterbildung des Erfindungsgedankens ist, dass Bindemittel ausgewählt werden, die nach Aushärten eine wasserabweisende Oberfläche ergeben.

### Figuren

Die Figuren 1 bis 6 zeigen Kurven der hemisphärischen Rückstreuung, aufgenommen mit einem PC-Einschub-Spektrometer der Firma Avantes, mit einer spektralen Empfindlichkeit von 320 bis 1100 nm, mit einer daran angeschlossenen Ulbrichtkugel, für die in den Beispielen 1 bis 5 dargestellten Farbproben.

### Der Erfindungsgegenstand wird im Folgenden anhand von Beispielen näher erläutert.

### Beispiel 1

Es wurde eine erfindungsgemäße, schwarze Farbe für Kunststoffoberflächen nach folgender Rezeptur angemischt:

| | |
|---|---|
| 50,00 g | Wasser mit 2% Tylose MH 2000 Firma Clariant |
| 15,00 g | Bindemittel U 330 der Firma Alberdingk |
| 15,00 g | Bindemittel APU 1014 der Firma Alberdingk |
| 05,00 g | Ultralube W-874 Firma Keim Additec |
| 00,20 g | Entschäumer Byk 024 |
| 00,20 g | Pigmentverteiler N Der Firma BASF |
| 35,00 g | Zirkonsilikat mittlere Teilchengröße 2 µm der Firma Wema |
| 02,00 g | Mikrohohlkugeln Expancel 416 DE 20 Akzo Nobel |
| 30,00 g | Tönpaste Schwarz bestehend aus: |
| | 20 Teilen Paliogen Schwarz L0086 BASF |
| | 80 Teilen Butylglykol |
| | 11 Teilen QWD 0108 Magenta der Sun Chemical |
| 05,00 g | Wasser |

Die Farbe wurde auf einer laborüblichen schwarz/weißen Farbprüfkarte mit einer Lackhantel in einer Schichtdicke von 150 µm aufgetragen und über dem schwarzen Untergrund der Farbprüfkarte spektral im Wellenlängenbereich von 400 bis 980 nm vermessen.

Die Messergebnisse sind als spektrale Reflexion auf einer Skala von 0 bis 100% in Fig. 1, Messkurve (1) dargestellt. Deutlich ist die erhöhte Reflexion im nahen Infrarotbereich erkennbar.

### Vergleichsbeispiel zu 1

Es wurde eine achromatisch schwarze Farbe, ähnlich den in der US 5,540,998 beschriebenen Farbewim Labor folgendermaßen hergestellt:

| | |
|---|---|
| 50,00 g | Wasser mit 2% Tylose MH 2000 Firma Clariant |
| 15,00 g | Bindemittel U 330 der Firma Alberdingk |
| 15,00 g | Bindemittel APU 1014 der Firma Alberdingk |
| 00,20 g | Entschäumer Byk 024 |
| 00,20 g | Pigmentverteiler N Der Firma BASF |
| 02,50 g | Hostatint Rot FGR der Firma Hoechst (heute Clariant) |
| 06,00 g | Hostatint Blau B2G der Firma Hoechst (heute Clariant) |
| 02,00 g | Hostatint Gelb 4GX der Firma Hoechst (heute Clariant) |

Die Farbe wurde auf einer laborüblichen schwarz/weißen Farbprüfkarte mit einer Lackhantel in einer Schichtdicke von 150 µm aufgetragen und über dem schwarzen Untergrund der Farbprüfkarte spektral im Wellenlängenbereich von 400 bis 980 nm vermessen.

Die Messergebnisse sind als spektrale Reflexion auf einer Skala von 0 bis 100% in Fig. 1, Messkurve (2) dargestellt. Die Reflexion im Wellenlängenbereich des nahen Infrarot ist deutlich geringer als bei der erfindungsgemäßen schwarzen Farbe gemäß Beispiel 1.

### Weiteres Vergleichsbeispiel zu Beispiel 1

Eine handelsübliche, schwarze Farbe der Weilburger Lackfabrik mit der Bezeichnung Senopur Teerschwarz RAL 9021 wurde auf einer laborüblichen schwarz/weißen Farbprüfkarte mit einer Lackhantel in einer Schichtdicke von 150 µm aufgetragen und über dem schwarzen Untergrund der Farbprüfkarte spektral im Wellenlängenbereich von 400 bis 980 nm vermessen.

Die Messergebnisse sind als spektrale Reflexion in Fig. 1, Messkurve (3) dargestellt. Die Reflexion im Wellenlängenbereich des nahen Infrarot liegt wie die Reflexion im sichtbaren Bereich des Spektrums unter 10% und ist damit deutlich geringer als bei der erfindungsgemäßen schwarzen Farbe gemäß Beispiel 1.

### Vergleich der Aufheizung unter Sonneneinstrahlung

Es wurden gleich große Proben der Farben auf eine Styroporplatte geklebt und der Sonnenstrahlung bei 98.000 Lx ausgesetzt. Die Temperaturen der Proben wurden mit einem Strahlungsthermometer vermessen. Es stellten sich folgende Temperaturen ein:

| | |
|---|---|
| Erfindungsgemäßes Schwarz | 54°C |
| Achromatisches Schwarz | 64°C |
| Senopur Teerschwarz RAL 9021 | 67°C |

### Beispiel 2

Es wurde eine erfindungsgemäße, braune Farbe nach folgender Rezeptur angemischt:

| | |
|---|---|
| 50,00 g | Wasser mit 2% Tylose MH 2000 Firma Clariant |
| 40,00 g | Foraperle 321 der Firma Elf Atochem |
| 00,20 g | Entschäumer Byk 024 |
| 00,20 g | Pigmentverteiler N Der Firma BASF |
| 05,00 g | Ecopaque Rot 12302 der Firma Heubach |
| 05,00 g | PK 4047 Grün der Firma Ferro |
| 10,00 g | Diafill 525 der Firma CR Minerals USA |
| 20,00 g | Zirkonsilikat mittlere Teilchengröße 2 µm der Firma Wema |
| 01,50 g | Mikrohohlkugeln Expancel 461 DE 20 der Akzo Nobel |

Die Farbe wurde auf einer laborüblichen schwarz/weißen Farbprüfkarte mit einer Lackhantel in einer Schichtdicke von 150 µm aufgetragen und über dem schwarzen Untergrund der Farbprüfkarte spektral im Wellenlängenbereich von 400 bis 980 nm vermessen.

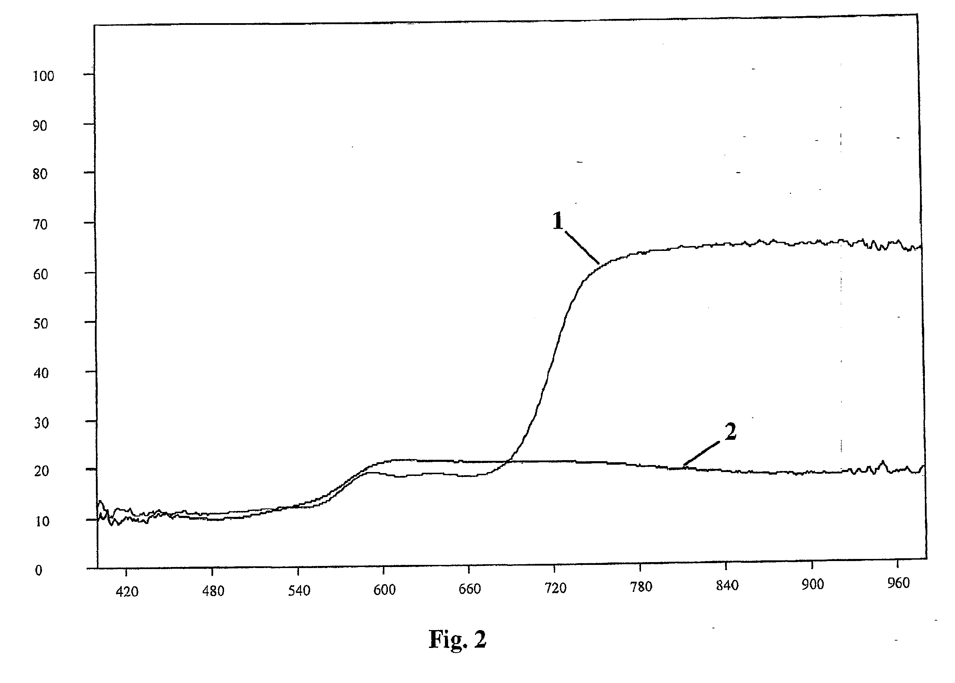

Die Messergebnisse sind als spektrale Reflexion auf einer Skala von 0 bis 100% in Fig. 2, Messkurve (1) dargestellt. Deutlich ist die erhöhte Reflexion im nahen Infrarotbereich erkennbar.

### Vergleichsbeispiel zu 2

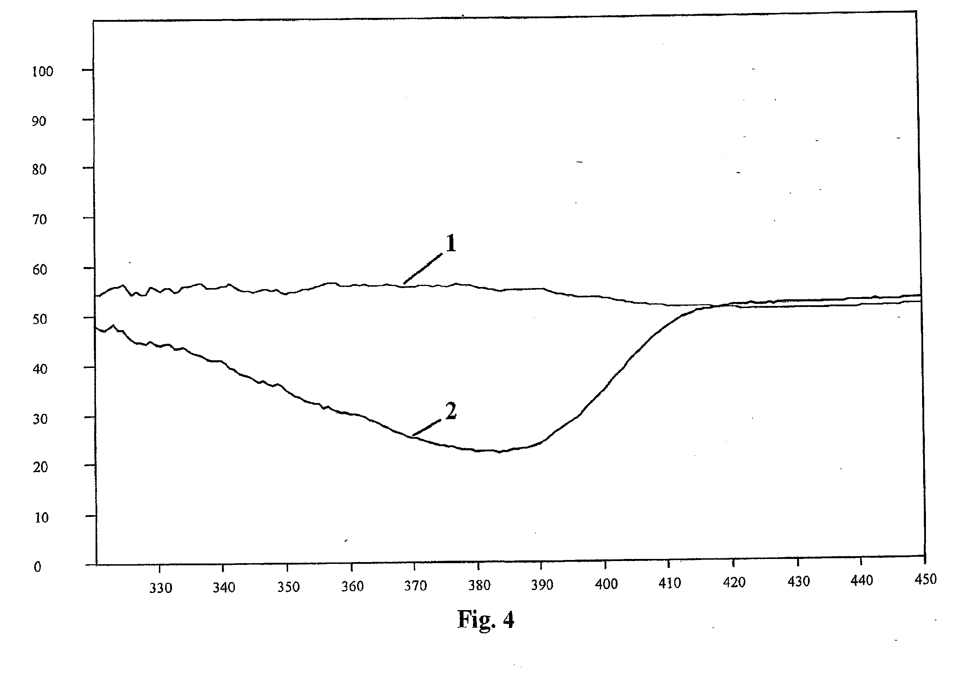

Die Farbkarte einer handelsüblichen Wandfarbe im Farbton Abiquiu braun der Firma Sonneborn USA wurde spektral im Wellenlängenbereich von 400 bis 980 nm vermessen. Die Messergebnisse sind in Fig. 2, Messkurve (2) dargestellt. Sie zeigen eine deutlich geringere Reflexion im nahen Infrarot als bei der erfmdungsgemäßen, braunen Farbe in Fig. 4. Unter Sonneneinstrahlung wird sich diese Farbe deutlich stärker erwärmen als die erfindungsgemäße, braune Farbe.

### Beispiel 3

Es wurde eine erfindungsgemäße, grüne Farbe nach folgender Rezeptur angemischt:

| | |
|---|---|
| 50,00 g | Wasser mit 2% Tylose MH 2000 Firma Clariant |
| 50,00 g | Bindemittel Mowilith DM 771 der Firma Hoechst |
| 05,00 g | Copo-Wachsdispersion 312 W Fa. Coating Products |
| 00,40 g | Entschäumer Byk 024 |
| 00,40 g | Pigmentverteiler N Der Firma BASF |
| 25,00 g | Zirkonsilikat mittlere Teilchengröße 2 µm der Firma Wema |
| 20,00 g | Calcilit 16G der Firma Alpha Calcit |
| 12,00 g | PK 4047 Grün der Firma Ferro |
| 10,00 g | PK 3080 Schwarz der Firma Ferro |
| 15,00 g | Wasser |
| 02,00 g | Mikrohohlglaskugeln S 22 der Firma 3M |

Mit einer Spritzpistole wurde die Farbe wurde auf eine graue Bitumenschindel der Firma Vedaform gespritzt und im Wellenlängenbereich von 400 bis 980 nm spektral vermessen.

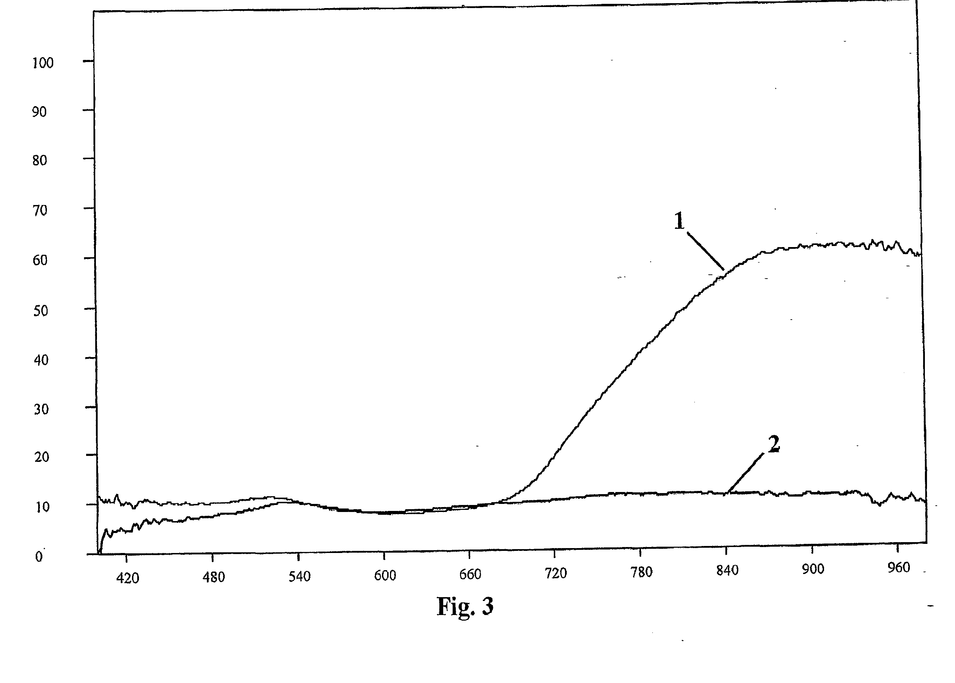

Die Messergebnisse sind in Fig. 3, Messkurve (1) als Reflexion auf einer Skala von 0 bis 100% über der Wellenlänge dargestellt. Die erhöhte Reflexion im Bereich des nahen Infrarot ist deutlich erkennbar.

### Vergleichsbeispiel zu 3

Eine grüne Bitumenschindel der Firma Vedaform wurde spektral im Wellenlängenbereich von 400 bis 980 nm vermessen. Die Messergebnisse als Reflexion über der Wellenlänge sind in Fig. 3, Messkurve (2) dargestellt. Sie zeigen eine deutlich geringere Reflexion im nahen Infrarot als bei der erfindungsgemäßen, grünen Farbe in Fig. 3, Messkurve (1). Unter Sonneneinstrahlung wird sich diese Dachschindel deutlich stärker erwärmen als die erfindungsgemä-βe, grün eingefärbte Dachschindel.

### Beispiel 4

Es wurde eine erfindungsgemäße, graue Farbe nach folgender Rezeptur angemischt:

| | |
|---|---|
| 50,00 g | Wasser mit 2% Tylose MH 2000 Firma Clariant |
| 30,00 g | Mowilith DM 611 der Firma Hoechst |
| 00,30 g | Entschäumer Byk 024 Byk Chemie |
| 00,30 g | Pigmentverteiler N Der Firma BASF |
| 80,00 g | Zirkonsilikat der Firma Wema |
| 60,00 g | Ropaque OP 62 Polymerpigment Rohm and Haas |
| 5,00 g | Copo Wachsdispersion 312W Coating Products |
| 20,00 g | Blanc Fixe HD 80 Firma Solvay |
| 40,00 g | Ferro PK 0032 Weiß Firma Ferro |
| 01,99 g | Expancel 461 DE 20 Firma Akzo Nobel |
| 01,70 g | Tönpaste Schwarz bestehend aus: |
| | 20 Teilen Paliogen Schwarz L0086 BASF |
| | 80 Teilen Butylglykol |
| | 11 Teilen QWD 0108 Magenta der Sun Chemical |

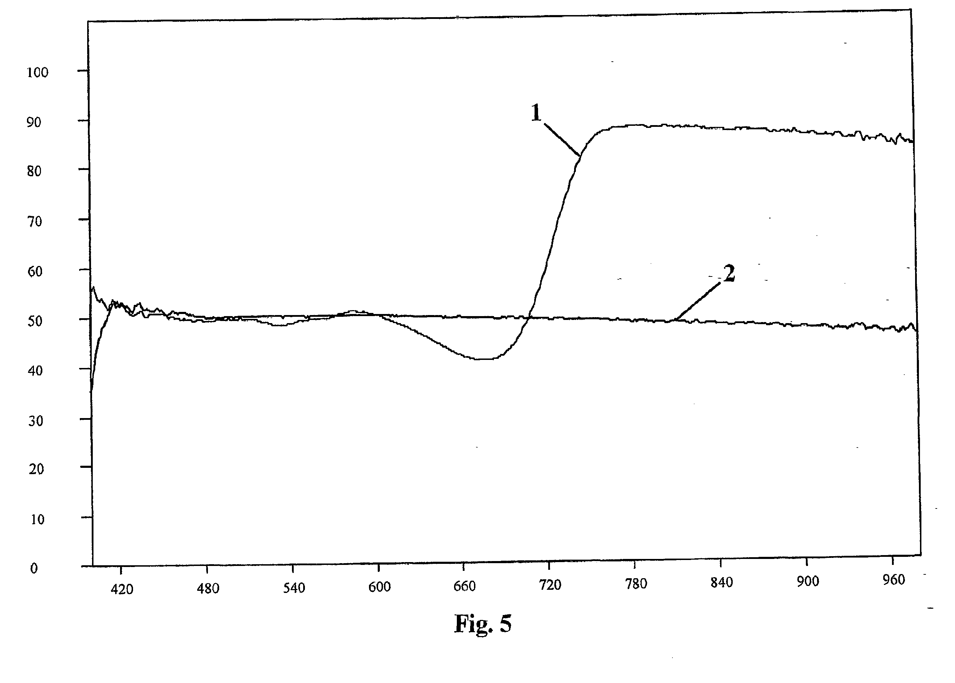

Die Farbe wurde auf einer laborüblichen schwarz/weißen Farbprüfkarte mit einer Lackhantel in einer Schichtdicke von 150 µm aufgetragen und über dem schwarzen Untergrund der Farbprüfkarte spektral im Wellenlängenbereich von 300 bis 450 nm vermessen. Die Messergebnisse sind in Fig. 4, Messkurve (1) dargestellt die Reflexion der erfindungsgemäßen grauen Farbe liegt im UV-Bereich bei einer Skala von 0 bis 100%, über 50%. Die Reflexion im sichtbaren Bereich und nahen Infrarot-Bereich des Spektrums ist in Fig. 5, Messkurve (1) für Wellenlängen von 400 bis 980 nm dargestellt.

### Vergleichsbeispiel zu Beispiel 4

100,00 g einer handelsüblichen, weißen Wandfarbe der Firma ispo GmbH mit der Bezeichnung "Lotusan" wurden mit 1 g einer Oxidschwarzpaste auf der Basis eines handelsüblichen Oxidschwarz der Firma Bayer im gleichen Grauton eingefärbt wie die erfindungsgemäße Farbe aus Beispiel 4. Die Farbe wurde dann auf einer laborüblichen schwarz/weißen Farbprüfkarte mit einer Lackhantel in einer Schichtdicke von 150 µm aufgetragen und über dem schwarzen Untergrund der Farbprüfkarte spektral im Wellenlängenbereich von 300 bis 450 nm vermessen. Die Messergebnisse sind in Fig. 4, Messkurve (2) dargestellt. Bedingt durch die starke Absorption von Titandioxid, das üblicherweise in handelsüblichen Farben als Weißpigment eingesetzt wird, liegt die Reflexion der getönten, handelsüblichen Farbe im UV-Bereich teilweise unter 30%. In Fig. 5, Messkurve (2) ist deutlich erkennbar, dass die Reflexion der grau getönten, handelsüblichen Wandfarbe auch im Bereich des nahen Infrarot von 720 bis über 980 nm deutlich geringer ist, als die Reflexion der erfindungsgemäßen, grauen Farbe, deren Messergebnis in Fig. 5, Messkurve (1) dargestellt ist. Unter Sonneneinstrahlung wird sich die handelsübliche Wandfarbe deutlich stärker erwärmen.

### Beispiel 5

Es wurde eine weitere, erfindungsgemäße, graue Farbe nach folgender Rezeptur angemischt:

| | |
|---|---|
| 50,00 g | Wasser mit 2% Tylose MH 2000 Firma Clariant |
| 30,00 g | Bindemittel Mowilith DM 771 der Firma Hoechst |
| 00,40 g | Entschäumer Byk 024 |
| 80,00 g | Zirkonsilikat Fa. Wema, Nürnberg |
| 00,30 g | Pigmentverteiler N Fa. BASF |
| 60,00 g | Polymerpigment OP62 Fa. Rohm and Haas |
| 09,00 g | Tego Phobe 1500 Tego Chemie, Essen |
| 20,00 g | Blanc Fixe HD 80, Fa. Solvay |
| 40,00 g | Ferro PK 0032 Weiß, Fa. Ferro |
| 02,00 g | Expancel 461 DE 20, Fa. Akzo Nobel |
| 01,45 g | Blaupigment 214, Fa. Shepherd |
| 04,00 g | Braunpigment 157, Fa. Shepherd |
| 03,30 g | Paliogen Schwarz L0086, Fa. BASF |

Die Farbe wurde auf einer laborüblichen schwarz/weißen Farbprüfkarte mit einer Lackhantel in einer Schichtdicke von 250 µm aufgetragen und über dem schwarzen Untergrund der Farbprüfkarte spektral im Wellenlängenbereich von 400 bis 980 nm vermessen.

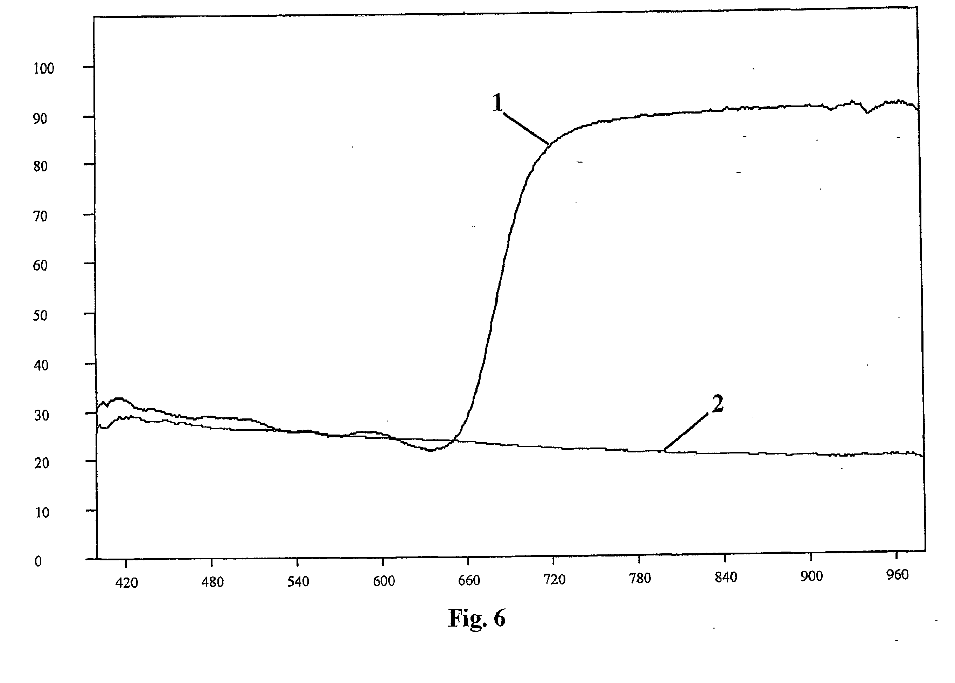

Die Messergebnisse sind als spektrale Reflexion über der Wellenlänge in Fig. 6, Messkurve (1) dargestellt.

### Vergleichsbeispiel zu 5

Die Farbkarte einer handelsüblichen Außenwandfarbe im Farbton "Drumhill Gray" der Firma Sonneborn USA wurde spektral im Wellenlängenbereich von 400 bis 980 nm vermessen. Die Messergebnisse sind in Fig. 6, Messkurve (2) dargestellt. Die handelsübliche, graue Wandfarbe zeigt eine deutlich geringere Reflexion im nahen Infrarot als bei der erfindungsgemäßen, grauen Farbe. Unter Sonneneinstrahlung wird sich diese Farbe deutlich stärker erwärmen als die erfindungsgemäße, graue Farbe.

### Vergleich der Aufheizung unter Sonneneinstrahlung

Es wurden gleich große Proben der Farben aus Beispiel 5 auf eine Styroporplatte geklebt und der Sonnenstrahlung bei 98.000 Lx ausgesetzt. Die Temperaturen der Proben wurden mit einem Strahlungsthermometer vermessen. Es stellten sich folgende Temperaturen ein:

| | |
|---|---|
| Erfindungsgemäßes Grau | 44°C |
| Handelsübliches "Drumhill Gray" | 58°C |

## Patentansprüche

1. Beschichtung mit geringer solarer Absorption umfassend
a) ein Bindemittel und/oder eine Bindemittelkombination, die im Wellenlängenbereich des ultravioletten-, des sichtbaren Lichtes und im Wellenlängenbereich des nahen Infrarot von 300 bis 2500 nm eine Transparenz größer 60% haben und im Wellenlängenbereich des thermischen Infrarot von 5 bis 50 µm eine Transparenz kleiner 70% haben;
b) erste Pigmente, die im Wellenlängenbereich von 300 bis 2500 nm eine Transparenz grö-βer 70% haben und deren Teilchengröße so gewählt ist, dass sie im Wellenlängenbereich des nahen Infrarot von 700 bis 1500 nm eine hohe Rückstreuung größer 70% haben und die im Bereich des thermischen Infrarot von 5 bis 50 µm eine Absorption größer 40% aufweisen;
c) zweite Pigmente, die im Wellenlängenbereich des sichtbaren Lichtes von 400 bis 700 nm spektralselektiv absorbieren und/oder im gesamten Wellenlängenbereich des sichtbaren Lichtes von 400 bis 700 nm mehr als 50% absorbieren und die im Wellenlängenbereich des nahen Infrarot von 700 bis 1500 nm eine Transparenz größer 50% haben und die im Bereich des thermischen Infrarot von 5 bis 50 µm eine Absorption größer 40% aufweisen;
d) und/oder dritte Pigmente, die im Spektralbereich des sichtbaren Lichtes von 400 bis 700 nm spektralselektiv absorbieren und/oder im gesamten Wellenlängenbereich des sichtbaren Lichtes von 400 bis 700 nm mehr als 50% absorbieren und die im Spektralbereich des nahen Infrarot selber reflektierend sind mit einer Reflexion größer 50% und die im Bereich des thermischen Infrarot von 5 bis 50 µm eine Absorption größer 40% aufweisen;
e) Füllstoffe zur Verringerung des Brechungsindexes der Bindemittelmatrix, bestehend aus Mikrohohlkugeln, die mit einem Gas oder Luft gefüllt sind und/oder Lufteinschlüsse im Bindemittel, deren Teilchen- bzw. Lufteinschlussgröße so gewählt sind, dass sie im Wellenlängenbereich des sichtbaren Lichtes von 400 bis 700 nm eine geringe Rückstreuung kleiner 70% haben, im Wellenlängenbereich des nahen Infrarot von 700 bis 1500 nm die Rückstreuung der ersten Pigmente um 10% erhöht und die im Bereich des thermischen Infrarot von 5 bis 50 µm eine Absorption größer 40% aufweisen.

2. Beschichtung mit geringer solarer Absorption nach Anspruch 1, **dadurch gekennzeichnet, dass** das Bindemittel ausgewählt ist aus
a) der Gruppe der lösemittelhaltigen Bindemittel, umfassend Acrylate, Styrol-Acrylate, Polyvinyle, Polystyrene und Styren Copolymere, Alkydharze, gesättigte und ungesättigte Polyester, Hydroxid-funktionale Polyester, Melamin-Formaldehyd Harze, Polyisocyanat Harze, Polyurethane, Epoxidharze, Fluorpolymere und Silikone, chlorsulfoniertes Polyäthylen, fluorierte Polymere, fluoriertes Acryl-Copolymer, Fluorsilikone, Plastisole, PVDF und Mischungen aus diesen;
b) der Gruppe der wässrigen Bindemittel, umfassend, die Gruppe der wasserlöslichen Binder aus Alkyden, Polyester, Polyacrylate, Epoxide und Epoxidester, aus der Gruppe der wässrigen Dispersionen und Emulsionen, die umfasst, Dispersionen und Emulsionen auf der Basis von, Acrylat, Styrol-Acrylat, Ethylen-Acrylsäure-Copolymere, Methacrylat, Vinylpyrrolidon-Vinylacetat-Copolymere, Polyvinylpyrrolidon, Polyisopropylacrylat, Polyurethane, Silikon, Wachsdispersionen auf der Basis von Polyethylen, Polypropylen, Teflon®, synthetische Wachse, fluorierte Polymere, fluoriertes Acryl-Copolymer in wässriger Lösung, Fluorsilikone und Mischungen aus diesen.

3. Beschichtung mit geringer solarer Absorption nach Ansprüchen 1 und 2 **dadurch gekennzeichnet, dass** das Bindemittel im Wellenlängenbereich des sichtbaren Lichtes von 300 bis 700 nm eine Transparenz größer 70% hat und im Wellenlängenbereich des thermischen Infrarot von 5 bis 50 µm eine Transparenz kleiner 60% hat.

4. Beschichtung mit geringer solarer Absorption nach Anspruch 1, **dadurch gekennzeichnet, dass** die ersten Pigmente ausgewählt sind aus der Gruppe der anorganischen Pigmente, aus der Gruppe der Metalloxide, der Metallsulfate, der Metallsulfide, der Metallfluoride, der Metallsilikate, der Metallcarbonate und Mischungen aus diesen.

5. Beschichtung mit geringer solarer Absorption nach Ansprüchen 1 und 4, **dadurch gekennzeichnet, dass** die ersten Pigmente ausgewählt sind aus der Gruppe der abbaubaren Materialien, ausgewählt aus Calciumcarbonat, aus Magnesiumcarbonat, aus Zirkonsilikat, aus Zirkonoxid, aus Aluminiumoxid, aus natürlichem Bariumsulfat und Mischungen aus diesen.

6. Beschichtung mit geringer solarer Absorption nach Ansprüchen 1, 4 und 5, **dadurch gekennzeichnet, dass** der Brechungsindex der ersten Pigmente größer 1,5 ist.

7. Beschichtung mit geringer solarer Absorption nach Ansprüchen 1, 4, 5 und 6, **dadurch gekennzeichnet, dass** die Teilchengröße der ersten Pigmente zwischen 0,9 und 3,1 µm liegt.

8. Beschichtung mit geringer solarer Absorption nach Anspruch 1, **dadurch gekennzeichnet, dass** die zweiten Pigmente ausgewählt sind aus der Gruppe der organischen Pigmente, ausgewählt aus der Gruppe der Azopigmente, ausgewählt aus Monoazo-, Disazo-, β-Naphtol-, Naphtol AS-, verlackte Azo-, Benzimidazolon-, Disazokondensations-, Metallkomplex-, Isoindolinon und Isoindolin-Pigmenten, ausgewählt aus der Gruppe der polycyclischen Pigmente, ausgewählt aus, Phthalocyanin-, Chinacridon-, Perylen- und Perinon-, Thioindigo-, Anthrachinon-, Anthrapyrimidin-, Flavanthron-, Pyranthron-, Anthanthron-, Dioxazin-, Triarylcarbonium-, Chino-phthalon-, Diketo-pyrrolo-pyrrol-Pigmente.

9. Beschichtung mit geringer solarer Absorption nach Anspruch 1, **dadurch gekennzeichnet, dass** die dritten Pigmente ausgewählt sind aus der Gruppe der anorganischen Pigmente, ausgewählt aus der Gruppe der Metalloxide und -Hydroxide, aus Cadmium-, Wismut-, Chrom-, Ultramarin- und Eisenblau-Pigmenten, aus der Gruppe der Rutil- und Spinellmischphasenpigmente und der beschichteten, plättchenförmigen Glimmerpigmente.

10. Beschichtung mit geringer solarer Absorption nach Ansprüchen 1 und 9, **dadurch gekennzeichnet, dass** die Teilchengröße der dritten Pigmente zwischen 0,7 und 2,9 µm liegt.

11. Beschichtung mit geringer solarer Absorption nach Anspruch **dadurch gekennzeichnet, dass** es sich bei den Füllstoffen um Mikrohohlkugeln aus einem organischen und/oder anorganischen Material handelt, das im Wellenlängenbereich von 300 bis 1500 nm eine Transparenz größer 70% aufweist.

12. Beschichtung mit geringer solarer Absorption nach Ansprüchen 1 und 11, **dadurch gekennzeichnet, dass** die Teilchengröße der Mikrohohlkugeln zwischen 10 und 100 µm liegt.

13. Beschichtung mit geringer solarer Absorption nach Ansprüchen 1, 11 und 12, **dadurch gekennzeichnet, dass** Mikrohohlkugeln aus Kunststoffen und/oder Glas ausgewählt werden.

14. Beschichtung mit geringer solarer Absorption nach Anspruch 1 **dadurch gekennzeichnet, dass** Mikrohohlkugeln aus Kunststoff ausgewählt werden, die in einer wässrigen Suspension vorliegen und die nach Abtrocknen einen Hohlraum bilden.

15. Beschichtung mit geringer solarer Absorption nach Ansprüchen 1 und 14, **dadurch gekennzeichnet, dass** die Teilchengröße der Mikrohohlkugeln bei 0.3 bis 1 µm liegt.

16. Beschichtung mit geringer solarer Absorption nach Anspruch 1, **dadurch gekennzeichnet, dass** die Reflexion der Beschichtung im Wellenlängenbereich des nahen Infrarot von 800 bis 1100 nm durchgehend größer 60% ist.

17. Beschichtung mit geringer solarer Absorption nach Anspruch 1 **dadurch gekennzeichnet, dass** die Reflexion der Beschichtung im Wellenlängenbereich des nahen Infrarot von 800 bis 1100 nm durchgehend größer 70% ist.

18. Beschichtung mit geringer, solarer Absorption nach Anspruch 1, **dadurch gekennzeichnet, dass** die Reflexion der Beschichtung im Wellenlängenbereich des sichtbaren Lichtes von 400 bis 700 nm im Mittel kleiner 70%, ist.

19. Beschichtung mit geringer solarer Absorption nach Ansprüchen 1 und 3, **dadurch gekennzeichnet, dass** Bindemittel ausgewählt werden, die nach Aushärten eine wasserabweisende Oberfläche ergeben.

## Claims

1. Coating having low solar absorption comprising
a) a binder and/or a binder combination, which in the wavelength range of ultraviolet light, of visible light and in the wavelength range of near infrared from 300 to 2,500 nm have a transparency greater than 60% and in the wavelength range of thermal infrared from 5 to 50 µm have a transparency less than 70%;
b) first pigments, which in the wavelength range from 300 to 2,500 nm have a transparency greater than 70% and the particle size of which is selected so that in the wavelength range of near infrared from 700 to 1,500 nm, they have high back-scattering greater than 70% and which in the range of thermal infrared from 5 to 50 µm have an absorption greater than 40%;
c) second pigments, which in the wavelength range of visible light from 400 to 700 nm absorb in spectral-selective manner and/or in the entire wavelength range of visible light from 400 to 700 nm absorb more than 50% and which in the wavelength range of near infrared from 700 to 1,500 nm have a transparency greater than 50% and which in the range of thermal infrared from 5 to 50 µm have an absorption greater than 40%;
d) and/or third pigments, which in the spectral range of visible light from 400 to 700 nm absorb in spectral-selective manner and/or in the entire wavelength range of visible light from 400 to 700 nm absorb more than 50% and which in the spectral range of near infrared are themselves reflecting having a reflection greater than 50% and which in the region of thermal infrared from 5 to 50 µm have an absorption greater than 40%;
e) fillers for reducing the refractive index of the binder matrix consisting of hollow microspheres, which are filled with a gas or air, and/or air inclusions in the binder, the particle size or air inclusion size of which are selected so that in the wavelength range of visible light from 400 to 700 nm, they have low back-scattering less than 70%, in the wavelength range of near infrared from 700 to 1,500 nm, the back-scattering of the first pigments increases by 10% and which in the range of thermal infrared from 5 to 50 µm have an absorption greater than 40%.

2. Coating having low solar absorption according to claim 1, **characterised in that** the binder is selected from
a) the group of solvent-containing binders comprising acrylates, styrene-acrylates, polyvinyls, polystyrenes and styrene, copolymers, alkyd resins, saturated and unsaturated polyesters, hydroxide-functional polyesters, melamine-formaldehyde resins, polyisocyanate resins, polyurethanes, epoxy resins, fluoropolymers and silicones, chlorosulphonated polyethylene, fluorinated polymers, fluorinated acrylic copolymer, fluorosilicones, plastisols, PVDF and mixtures of these;
b) the group of aqueous binders comprising the group of water-soluble binders from alkyds, polyesters, polyacrylates, epoxides and epoxy esters, from the group of aqueous dispersions and emulsions, which comprises dispersions and emulsions based on acrylate, styrene-acrylate, ethylene-acrylic acid copolymers, methacrylate, vinyl pyrrolidone-vinyl acetate copolymers, polyvinyl pyrrolidone, polyisopropyl acrylate, polyurethanes, silicone, wax dispersions based on polyethylene, polypropylene, Teflon® , synthetic waxes, fluorinated polymers, fluorinated acrylic copolymer in aqueous solution, fluorosilicones and mixtures of these.

3. Coating having low solar absorption according to claims 1 and 2, **characterised in that** the binder in the wavelength range of visible light from 300 to 700 nm has a transparency greater than 70% and in the wavelength range of thermal infrared from 5 to 50 µm has a transparency less than 60%.

4. Coating having low solar absorption according to claim 1, **characterised in that** the first pigments are selected from the group of inorganic pigments, from the group of metal oxides, metal sulphates, metal sulphides, metal fluorides, metal silicates, metal carbonates and mixtures of these.

5. Coating having low solar absorption according to claims 1 and 4, **characterised in that** the first pigments are selected from the group of degradable materials, selected from calcium carbonate, from magnesium carbonate, from zirconium silicate, from zirconium oxide, from aluminium oxide, from natural barium sulphate and mixtures of these.

6. Coating having low solar absorption according to claims 1,4 and 5, **characterised in that** the refractive index of the first pigments is greater than 1.5.

7. Coating having low solar absorption according to claims 1, 4, 5 and 6, **characterised in that** the particle size of the first pigments lies between 0.9 and 3.1 µm.

8. Coating having low solar absorption according to claim 1, **characterised in that** the second pigments are selected from the group of organic pigments, selected from the group of azo pigments, selected from monoazo, diazo, β-naphthol, napthol AS, lacquered azo, benzimidazolone, diazo condensation, metal complex, isoindolinone and isoindoline pigments, selected from the group of polycyclic pigments, selected from phthalocyanine, quinacridone, perylene and perinone, thioindigo, anthraquinone, anthrapyrimidine, flavanthrone, pyranthrone, anthanthrone, dioxazine, triarylcarbonium, quinophthalone, diketo-pyrrolo-pyrrole pigments.

9. Coating having low solar absorption according to claim 1, **characterised in that** the third pigments are selected from the group of inorganic pigments, selected from the group of metal oxides and metal hydroxides, from cadmium, bismuth, chromium, ultramarine and Prussian blue pigments, from the group of rutile and spinel mixed phase pigments and the coated, lamellar mica pigments.

10. Coating having low solar absorption according to claims 1 and 9, **characterised in that** the particle size of the third pigments lies between 0.7 and 2.9 µm.

11. Coating having low solar absorption according to claim 1, **characterised in that** the fillers are hollow microspheres made from an organic and/or inorganic material, which in the wavelength range from 300 to 1,500 nm has a transparency greater than 70%.

12. Coating having low solar absorption according to claims 1 and 11, **characterised in that** the particle size of the hollow microspheres lies between 10 and 100 µm.

13. Coating having low solar absorption according to claims 1, 11 and 12, **characterised in that** hollow microspheres made from plastics and/or glass are selected.

14. Coating having low solar absorption according to claim 1, **characterised in that** hollow microspheres made from plastic are selected, which exist in an aqueous suspension and which form a cavity after drying.

15. Coating having low solar absorption according to claims 1 and 14, **characterised in that** the particle size of the hollow microspheres lies at 0.3 to 1 µm.

16. Coating having low solar absorption according to claim 1, **characterised in that** the reflection of the coating in the wavelength range of near infrared from 800 to 1,100 nm is consistently greater than 60%.

17. Coating having low solar absorption according to claim 1, **characterised in that** the reflection of the coating in the wavelength range of near infrared from 800 to 1,100 nm is consistently greater than 70%.

18. Coating having low solar absorption according to claim 1, **characterised in that** the reflection of the coating in the wavelength range of visible light from 400 to 700 nm is on average less than 70%.

19. Coating having low solar absorption according to claims 1 and 3, **characterised in that** binders are selected which produce a water-repellent surface after curing.

## Revendications

1. Revêtement à absorption solaire limitée comprenant :
a) un liant et/ou une combinaison de liants qui, dans la plage de longueurs d'onde de la lumière ultraviolette, de la lumière visible et de la plage de longueur d'onde de l'infrarouge proche de 300 à 2500 nm, ont une transparence supérieure à 60 % et, dans la plage de longueurs d'onde de l'infrarouge thermique de 5 à 50 µm, ont une transparence inférieure à 70 % ;
b) des premiers pigments, qui, dans la plage de longueurs d'onde de 300 à 2500 nm, ont une transparence supérieure à 70 % et dont la taille de particule est choisie telle que, dans la plage de longueurs d'onde de l'infrarouge proche, de 700 à 1500 nm, ont une rétrodiffusion supérieure à 70 % et qui, dans la plage de l'infrarouge proche de 5 à 50 µm, présentent une absorption supérieure à 40 % ;
c) des deuxièmes pigments, qui, dans la plage de la longueur d'onde de la lumière visible de 400 à 700 nm, absorbent de façon spéctralement sélective et/ou dans l'ensemble de la plage de longueurs d'onde de la lumière visible de 400 à 700 nm absorbent plus de 50 % et qui, dans la plage de longueurs d'onde de l'infrarouge proche de 700 à 1500 nm, ont une transparence supérieure à 50 % et, dans la plage de l'infrarouge thermique de 5 à 50 µm, présentent une absorption supérieure à 40 % ;
d) et/ou des troisièmes pigments qui dans la plage spectrale de la lumière visible de 400 à 700 nm absorbent de façon spectralement sélective et/ou, dans la plage de longueurs d'onde de la lumière visible, de 400 à 700 nm, absorbent plus de 50 % et qui, dans la plage spectrale de l'infrarouge proche, sont eux-mêmes réfléchissants et avec une réflexion supérieure à 50 % et qui, dans la plage de l'infrarouge thermique de 5 à 50 µm, présentent une absorption supérieure à 40 % ;
e) des charges pour diminuer l'indice de réfraction de la matrice de liant, formée de microsphères creuses, remplies d'un gaz ou bien d'air et/ou d'inclusions d'air dans le liant, dont la taille de particule et/ou d'inclusions d'air est choisie telle que, dans la plage de longueurs d'onde de la lumière visible, de 400 à 700 nm, elles ont une rétrodiffusion inférieure à 70 %, dans la plage de longueurs d'onde de l'infrarouge proche, de 700 à 1500 nm, elles font que la rétrodiffusion des premiers pigments est augmentée de 10 % et qui, dans la plage de l'infrarouge thermique de 5 à 50 µm, présentent une absorption supérieure à 40 %.

2. Revêtement à absorption solaire limitée selon la revendication 1, **caractérisé en ce que** le liant est sélectionné dans :
a) le groupe des liants contenant des solvants, comprenant des acrylates, styrènes-acrylates, polyvinyles, polystyrènes et copolymères de styrène, des résines alkyde, un polyester saturé et insaturé, un polyester à fonctionnalité hydroxyde, des résines mélamine-formaldéhyde, des résines polyisocianate, du polyuréthane, des résines époxy, des polymères fluorés et des silicones, du polyéthylène chlorosulfoné, des polymères flururés, un copolymère acrylique fluoré, du fluorosilicone, des plastisols, du PVDF et des mélanges de ceux-ci ;
b) le groupe des liants aqueux comprenant le groupe des liants solubles dans l'eau, formé des alkydes polyesters, polyacrylates, époxyde et époxyde-ester, du groupe des dispersions et des émulsions aqueuses comprenant des dispersions et des émulsions à base acrylate, styrène acrylate, copolymère éthylène acide acrylique, métacryate, copolymère vinyl pyrrolidon-vinyl acétate, polyvinyle pyrrolidon, polyisopropyle acrylate, polyuréthane, silicone, dispersions dans la paraffine à base de polyéthylène, polypropylène, Teflon® , cire synthétique, polymère fluoré, copolymère acrylique fluoré en solution aqueuse, fluorosilicone, et des mélanges de ceux-ci.

3. Revêtement à absorption solaire limitée selon les revendications 1 et 2, **caractérisé en ce que** le liant, dans la plage de longueurs d'onde de la lumière visible, de 300 à 700 nm, présente une transparence supérieure à 70 % et, dans la plage de longueur d'onde de l'infrarouge thermique, de 50 à 55 µm, présente une transparence inférieure à 60 %.

4. Revêtement à absorption solaire limitée selon la revendication 1, **caractérisé en ce que** les premiers pigments sont sélectionnés dans le groupe des pigments non organiques, dans le groupe des oxydes métalliques, des sulfates métalliques, des sulfures métalliques, des fluorures métalliques, des silicates métalliques, des carbonates métalliques et des mélanges formés de ceux-ci.

5. Revêtement à absorption solaire limitée selon les revendications 1 et 4, **caractérisé en ce que** les premiers pigments sont sélectionnés dans le groupe des matériaux dégradables, sélectionnés parmi le carbonate de calcium, le carbonate de magnésium, le silicate de zirconium, l'oxyde de zirconium, l'oxyde d'aluminium, le sulfate de baryum naturel et des mélanges de ceux-ci.

6. Revêtement à absorption solaire limitée, selon les revendications 1, 4 et 5, **caractérisé en ce que** l'indice de réfraction des premiers pigments est supérieur à 1,5.

7. Revêtement à absorption solaire limitée, selon les revendications 1, 4, 5 et 6, **caractérisé en ce que** la taille de particule des premiers pigments est comprise entre 0,9 et 3;1 µm.

8. Revêtement à absorption solaire limitée, selon la revendication 1, **caractérisé en ce que** les deuxièmes pigments sont sélectionnés dans le groupe des pigments organiques sélectionnés dans le groupe des azopigments, sélectionnés parmi les pigments monoazo, disazo, β, napthol, npathol AS, azo vernis, benzimidazolone, disazocondensation, complexes métalliques, isoindolinone et isoindoline, sélectionnés dans le groupe des pigments polycycliques, sélectionnés parmi les pigments phtalocyanine, chinacridon, pérylène, périnon, thioindigo, anthrachinone, anthrapyrimidine, flavanthrone, pyranthrone antrhantrone, dioxazine, triarylcarbonium, chino-phtalone, dicéto-pyrrolo-pyrrol.

9. Revêtement à absorption solaire limitée, selon la revendication 1, **caractérisé en ce que** les troisièmes ) pigments sont sélectionnés dans le groupe des pigments non organiques, sélectionnés dans le groupe des oxydes et des hydroxydes métalliques, pigments à base de cadmium, bismut, chrome, ultramarine et bleu fer, et parmi le groupe des pigments rutile et à phase mélangée de spinelle, et des pigments de mica, revêtus en forme de plaquettes.

10. Revêtement à absorption solaire limitée, selon les revendications 1 et 9, **caractérisé en ce que** la taille de particule des troisièmes pigments est comprise entre 0,7 et 2,9 µm.

11. Revêtement à absorption solaire limitée, selon la revendication 1, **caractérisé en ce que**, concernant les charges, il s'agit de microsphères creuses, formées d'un matériau organique et/ou non organique, présentant, dans la plage de longueurs d'onde de 300 à 1500 nm, une transparence supérieure à 70 %.

12. Revêtement à absorption solaire limitée; selon les revendications 1 et 11, **caractérisé en ce que** la taille de particule des microsphères creuses est comprise entre 10 et 100 µm.

13. Revêtement à absorption solaire limitée, selon les revendications 1, 11 et 12, **caractérisé en ce que** les microsphères creuses sont en des matériaux sélectionnés parmi les matières synthétiques et/ou le verre.

14. Revêtement à absorption solaire limitée, selon la revendication 1, **caractérisé en ce que** les microsphères creuses sont sélectionnées en matière synthétique, se présentant en suspension aqueuse et formant un espace creux après le séchage.

15. Revêtement à absorption solaire limitée, selon les revendications 1 et 14, **caractérisé en ce que** la taille de particule des microsphères creuses va de 0,3 à 1 µm.

16. Revêtement à absorption solaire limitée, selon la revendication 1, **caractérisé en ce que** la réflexion du revêtement dans la plage de longueur d'onde de l'infrarouge proche de 800 à 1100 nm est continûment supérieure à 60 %.

17. Revêtement à absorption solaire limitée, selon la revendication 1, **caractérisé en ce que** la réflexion du revêtement dans la plage de longueurs d'onde de l'infrarouge proche de 800 à 1100 nm est continûment supérieure à 70 %.

18. Revêtement à absorption solaire limitée, selon la revendication 1, **caractérisé en ce que** la réflexion du revêtement, dans la plage de longueurs d'onde de la lumière visible de 400 à 700 nm, est en moyenne inférieure à 70 %.

19. Revêtement à absorption solaire limitée, selon les revendications 1 à 3, **caractérisé en ce que** l'on sélectionne des liants qui donnent une surface hydrophobe après le durcissement.
